# EUROPEAN PATENT SPECIFICATION

(11) **EP 4 465 509 B1**
(45) Date of publication and mention of the grant of the patent: **09.09.2026**
(21) Application number: 24174725.2
(22) Date of filing: 08.05.2024
(51) Int. Cl.: H02K 17/26, H02K 21/46

(54) **MOTOR**
MOTOR
MOTEUR

(30) Priority: 15.05.2023 JP 2023080423
(43) Date of publication of application: 20.11.2024
(73) Proprietor: MAZDA MOTOR CORPORATION, Hiroshima 730-8670 (JP)
(72) Inventor: Yonemori, Kei, Aki-gun, Hiroshima, 730-8670 (JP)
(74) Representative: Lorenz Seidler Gossel Part. mbB

(56) References cited:
- EP-A2- 1 519 471
- WO-A2-2008/137709
- CN-U- 203 261 215
- DE-A1- 102015 001 313
- US-A- 4 139 790
- US-A1- 2006 131 980
- OU LEZHI ET AL: "Study on the effect of permanent magnets in a novel pole-changing motor", 2016 19TH INTERNATIONAL CONFERENCE ON ELECTRICAL MACHINES AND SYSTEMS (ICEMS), THE INSTITUTE OF ELECTRICAL ENGINEERS OF JAPAN, 13 November 2016 (2016-11-13), pages 1 - 4, XP033054035

## Description

### [Technical Field]

The present invention relates to a motor, and particularly to a motor used for driving a driving wheel of a vehicle. Further, the invention is directed to a vehicle driving system and a vehicle using such motor.

### [Background Art]

Conventionally, it has been known that motors are used for driving various kinds of machines. For example, Patent Literature 1 discloses a motor for driving spinning machinery. The motor for driving spinning machinery includes a stator, a rotor disposed on the inner side of the stator, a cage unit provided for the rotor, and a permanent magnet unit provided on the inner side of the cage unit of the rotor, and is used for driving a spindle bearing a bobbin on which a thread is to be wound. US 4 139 790 A discloses a motor with a rotor having a permanent magnet unit and a cage unit. The cage unit includes a plurality of conductor bars extending in an axial and radial direction. The magnets of the permanent magnet unit are interposed between the plurality of the conductor bars. Similar rotor structures are known from each of DE 10 2015 001 313 A1, WO 2008/137709 A2, US 2006/131980 A1 and EP 1 519 471 A2.

### [Citation List]

### [Patent Literature]

[Patent Literature 1] Japanese Patent Laid-Open No. 2000-178840

### [Summary of Invention]

### [Problems to be Solved by the Invention]

As a vehicle driving motor provided for an electric automobile or the like, a permanent magnet motor is typically used. The permanent magnet motor can instantaneously generate the maximum motor torque in the slow rotation range of the motor and therefore has an advantage of ensuring a high travel start capability from the halt state. However, the permanent magnet motor has a high counter electromotive force in the fast rotation range of the motor, and therefore, the motor torque may be insufficient during traveling at a high speed, for example. Therefore, there is a demand for a vehicle driving motor capable of generating a motor torque required for driving a vehicle in both the slow rotation range and the fast rotation range of the motor.

To meet the demand, it can be considered that a motor for driving spinning machinery including a rotor with a permanent magnet unit capable of generating the maximum motor torque in the slow rotation range and a cage unit that is not affected by the counter electromotive force in the fast rotation range, such as the motor according Patent Literature 1, is used as a vehicle driving motor.

However, with the motor like the motor according to Patent Literature 1, since the permanent magnet unit is disposed on the inner side of the cage unit, the permanent magnet unit is disposed on the inner side in the rotor than the permanent magnet unit of a typical permanent magnet motor, so that the permanent magnet unit and the stator are spaced away from each other in the radial direction. Since the permanent magnet unit includes a plurality of permanent magnets disposed side by side in the circumferential direction, if the permanent magnets and the stator are spaced apart from each other in the radial direction, there is a possibility that at least part of the magnetic flux from a permanent magnet to the radial-direction outer side is not directed to the stator but leaks to other permanent magnets that are adjacent to the permanent magnet in the circumferential direction. In such a case, the leaked magnetic flux is not converted into the force for rotating the rotor, so that it can be difficult to generate a motor torque required for driving the vehicle.

The present invention has been devised in view of these respects, and an object of the present invention is to provide a motor that can prevent leakage of a magnetic flux between permanent magnets that are adjacent in the circumferential direction.

### [Means for Solving the Problems]

To attain the object described above, the present invention provides the means for solution concerning a motor including a stator having a cylindrical shape and a rotor having a cylindrical shape provided in the stator so as to be rotatable about an axis that is the same as a central axis of the stator, a driving wheel of a vehicle being driven by rotation of the rotor

Specifically, the invention is characterized in that the rotor has a cage unit and a permanent magnet unit provided on an inner side of the cage unit, the permanent magnet unit has a plurality of permanent magnets disposed side by side in a circumferential direction, the cage unit includes a plurality of secondary conductors that have a plate-like shape and extend in a radial and axial direction of the motor, and the plurality of secondary conductors are configured such that the permanent magnet is interposed between inner parts of secondary conductors on opposite sides in the circumferential direction.

A second preferred aspect of the invention is characterized in that outer ends of the plurality of secondary conductors form an outer circumferential end part of the rotor.

A third preferred aspect of the invention is characterized in that inner ends of the plurality of secondary conductors are located on an inner side than inner ends of the plurality of permanent magnets.

A fourth preferred aspect of the invention is characterized in that the cage unit further includes a plurality of other secondary conductors, the plurality of other secondary conductors are disposed side by side in the circumferential direction at circumferential positions corresponding to the plurality of permanent magnets on an outer side, and inner ends of the plurality of other secondary conductors are located on an outer side than inner ends of the plurality of secondary conductors.

A fifth preferred aspect of the invention is characterized in that a plurality of second secondary conductors is disposed side by side between two first secondary conductors 32a in the circumferential direction.

A sixth preferred aspect of the invention is characterized in that the first secondary conductors are disposed side by side at intervals of about 45° in the circumferential direction.

According to the invention, the rotor is divided into an outer rotor part and an inner rotor part, the plurality of permanent magnets are housed in a housing part provided between the outer rotor part and the inner rotor part in the radial direction, and the housing part is filled with a resin material for coupling the outer rotor part, the inner rotor part and the plurality of permanent magnets to each other.

An further preferred aspect of the invention is characterized in that the permanent magnets have a plate-like shape, the plurality of permanent magnets are disposed side by side in a circumferential direction between the outer rotor part and the inner rotor part in a radial direction, a surface on a side in a thickness direction of each permanent magnet is in contact with an inner circumferential surface of the outer rotor part, and a surface on another side in the thickness direction of each permanent magnet is in contact with an outer circumferential surface of the inner rotor part.

A further preferred aspect of the invention is characterized in that the number of poles of the permanent magnet unit is different from the number of poles of the rotating magnetic field of the stator and/or the number of poles of the cage unit when the motor is operated in an asynchronous operation mode.

A further preferred aspect of the invention is characterized in that the outer rotor part includes an outer rotor core having a plurality of housing recesses that are recessed from an outer circumferential surface of the outer rotor core to a radial-direction inner side and a plurality of second through-holes formed to penetrate the outer rotor core from the inner circumferential surface to the outer circumferential surface in the radial direction, wherein the secondary conductors are housed in the plurality of second through-holes and the plurality of second secondary conductors are housed in the plurality of housing recesses.

An further preferred aspect of the invention is characterized in that a cover having a cylindrical shape, in particularly made of carbon fiber-reinforced plastics, is wound around the outer periphery of the outer rotor core.

A further preferred aspect of the invention is characterized in that the inner rotor part has a polygonal shape, in particular an octagonal shape.

The invention is further directed to vehicle driving system comprising the motor according to the invention or to any of the preferred aspects of the invention. The vehicle driving system further comprises a controller capable of switching between a synchronous operation mode in which the rotor is rotated using a magnetic force of the permanent magnet unit and an asynchronous operation mode in which the rotor is rotated using an induced current produced in the cage unit.

The invention is further directed to a vehicle including at least one driving wheel (FW) being driven by rotation of the rotor according to the invention or being driven by rotation of a rotor according to the driving system according to the invention.

### [Advantageous Effects of Invention]

According to the first invention, the magnetic flux from each permanent magnet to the radial-direction outer side is guided to the outer side of the rotor by each secondary conductor and is directed to the stator. In this way, the magnetic flux can be prevented from leaking to adjacent other permanent magnets. In addition, since the leakage is prevented by using the secondary conductors of the cage unit, no additional member for preventing the leakage of the magnetic flux is required. Therefore, the cost of the motor can be reduced.

According to the second invention, the plurality of secondary conductors extend from the vicinity of the plurality of permanent magnets to the outer circumferential end part of the rotor in the radial direction. Therefore, the magnetic flux can be guided to the stator with higher reliability compared with a case where the outer end of each secondary conductor is located in a radially halfway portion of the rotor.

According to the third invention, the plurality of secondary conductors extend to the inner side than the plurality of permanent magnets. Therefore, the permanent magnets that are adjacent in the circumferential direction are separated by the secondary conductors, so that the leakage of the magnetic flux can be prevented with higher reliability.

According to the fourth invention, since the inner ends of the plurality of other second secondary conductors are located on the outer side than the inner ends of the plurality of secondary conductors, a region in which the plurality of permanent magnets are disposed can be provided on the inner side of the plurality of other secondary conductors.

According to the invention, the outer rotor part, the inner rotor part and the plurality of permanent magnets are coupled to each other by the resin material. Therefore, the outer rotor part, the inner rotor part and the plurality of permanent magnets can be prevented from being displaced from their respective appropriate positions.

### [Brief Description of Drawings]

FIG. 1 is a plan view showing a schematic configuration of a vehicle equipped with a motor according to an embodiment of the present invention.
FIG. 2 is a block diagram showing the vehicle driving system.
FIG. 3 is a schematic cross-sectional view showing a radial cross section of a motor.
FIG. 4 is a flowchart showing an example of a control process by a control device.
FIG. 5 is a diagram showing a motor torque in a synchronous operation mode.
FIG. 6 is a diagram showing a motor torque in an asynchronous operation mode.
FIG. 7 is a diagram showing a variation corresponding to FIG. 6.
FIG. 8 is a diagram showing a variation corresponding to FIG. 6.
FIG. 9 is a diagram showing a variation corresponding to FIG. 4.

### [Mode for Carrying Out the Invention]

In the following, an embodiment of the present invention will be described in detail. The preferred embodiment described below is essentially intended for illustration purposes.

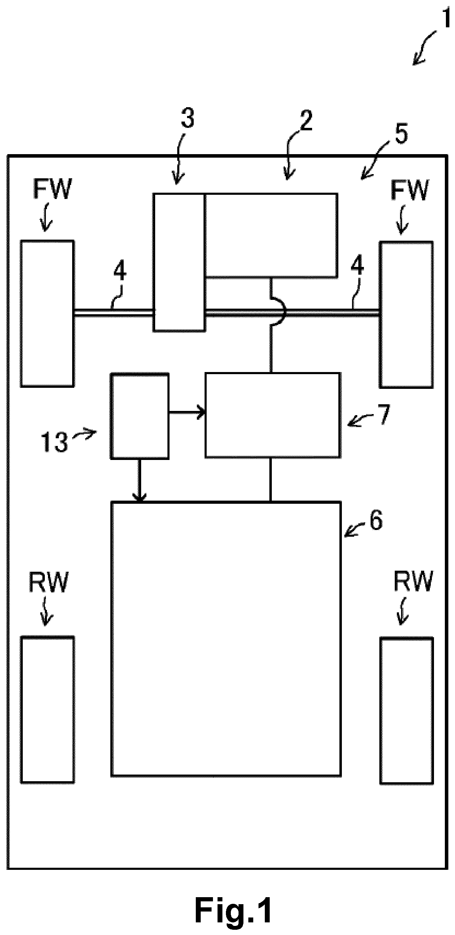

FIG. 1 shows a vehicle 1 on which a motor 2 according to an embodiment of the present invention is mounted. The vehicle 1 is a front-wheel-drive electric automobile on which a motor 2 as a drive source is mounted. The vehicle 1 includes a speed reducer 3, a pair of left and right drive shafts 4, a pair of left and right front wheels FW (driving wheels), and a pair of left and right rear wheels RW (driven wheels).

The motor 2 is disposed in a motor room (not shown) provided in a front part of the vehicle 1. The motor 2 is coupled with the front wheels FW via the speed reducer 3 and the drive shafts 4. In this way, a motor torque (wheel driving force) generated by the motor 2 is transferred to the left and right front wheels FW via the speed reducer 3 and the left and right drive shafts 4.

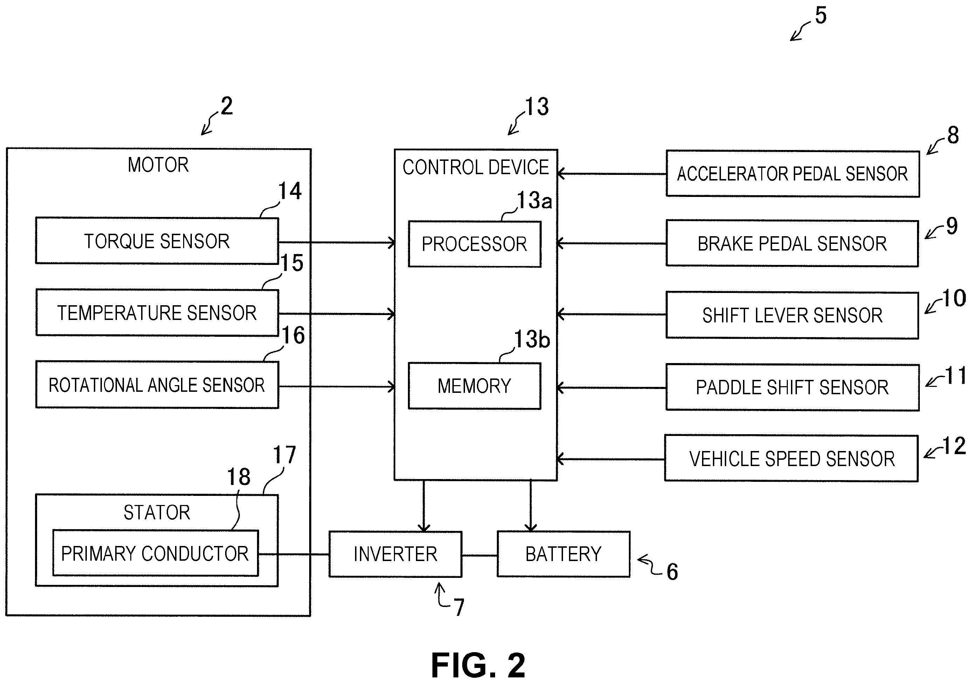

Next, with reference to FIG. 2, the vehicle driving system 5 mounted on the vehicle 1 will be described.

The vehicle driving system 5 includes the motor 2, a battery 6, an inverter 7, an accelerator pedal sensor 8, a brake pedal sensor 9, a shift lever sensor 10, a paddle shift sensor 11, a vehicle speed sensor 12, and a control device 13.

The motor 2 includes a torque sensor 14, a temperature sensor 15, a rotational angle sensor 16 and a stator 17.

The torque sensor 14 is a sensor capable of detecting an actual motor torque generated by the motor 2. The torque sensor 14 is configured to transmit detected actual motor torque information of the motor 2 to the control device 13.

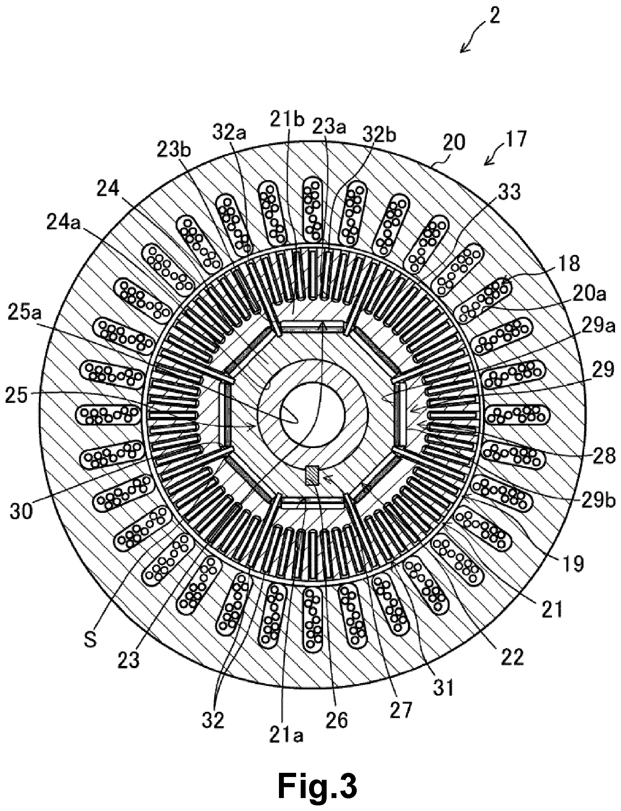

The temperature sensor 15 is a sensor (an infrared sensor, for example) capable of detecting an actual temperature of a permanent magnet unit 28 (see FIG. 3) of the motor 2. The temperature sensor 15 is configured to transmit detected actual temperature information of the permanent magnet unit 28 to the control device 13.

The rotational angle sensor 16 is a sensor (a resolver or an encoder, for example) capable of detecting a rotational angle of a rotor 19 (see FIG. 3) of the motor 2. The rotational angle sensor 16 is configured to transmit detected rotational angle information to the control device 13.

The stator 17 includes a plurality of primary conductors 18. The plurality of primary conductors 18 are electrically connected to the inverter 7.

The battery 6 is a lithium-ion battery, for example, and is capable of being charged with and discharging a direct current. The battery 6 is electrically connected to the motor 2 via the inverter 7.

The inverter 7 is capable of conversion between a direct current and an alternating current (a three-phase alternating current, for example). The inverter 7 is capable of performing a mode of converting a direct current discharged from the battery 6 into an alternating current and then supplying the alternating current to the motor 2 and a mode of converting an alternating current (regenerated current) output from the motor 2 into a direct current and then charging the battery 6 with the direct current.

The accelerator pedal sensor 8 is a sensor capable of detecting a depression amount (accelerator opening) of an accelerator pedal (not shown) by a driver of the vehicle 1. The accelerator pedal sensor 8 is configured to transmit detected depression amount information of the accelerator pedal to the control device 13.

The brake pedal sensor 9 is a sensor capable of detecting a depression amount (brake opening) of a brake pedal (not shown) by the driver of the vehicle 1. The brake pedal sensor 9 is configured to transmit detected depression amount information of the brake pedal to the control device 13.

The shift lever sensor 10 is a sensor (a range sensor, for example) capable of detecting a position (shift position) of a shift lever (not shown) selected by the driver of the vehicle 1. In this embodiment, the driver can select any shift position from parking (parking range), reverse (reverse range), neutral (neutral range), drive (traveling range), and manual (manual range) by manually operating the shift lever. The shift lever sensor 10 is configured to transmit detected shift position information to the control device 13. In this embodiment, in the manual (manual range), the shift lever sensor 10 is configured to transmit, to the control device 13, information (plus operation information) about an operation of moving the shift lever from a reference position to a vehicle front side performed by the driver of the vehicle 1 or information (minus operation information) about an operation of moving the shift lever from the reference position to a vehicle rear side performed by the driver of the vehicle 1. Note that in the manual (manual range), the shift lever is configured to return to the reference position when the driver of the vehicle 1 releases the shift lever.

The paddle shift sensor 11 is a sensor capable of detecting an operation of a pair of left and right paddle shift switches (not shown) provided on a steering wheel. The paddle shift sensor 11 is configured to transmit detected operation information of the paddle shift switches to the control device 13. In this embodiment, the paddle shift sensor 11 is configured to transmit, to the control device 13, operation information (plus operation information) about an operation of the right paddle shift switch performed by the driver of the vehicle 1 or operation information (minus operation information) about an operation of the left paddle shift switch performed by the driver of the vehicle 1.

The vehicle speed sensor 12 is a sensor (wheel speed sensors for the front wheels FW and the rear wheels RW) capable of detecting a vehicle speed of the vehicle 1. The vehicle speed sensor 12 is configured to transmit detected vehicle speed information to the control device 13.

The control device 13 is configured to control the motor 2, the battery 6 and the inverter 7 based on the information received from the sensors. Note that the motor 2 is configured to be indirectly controlled via the inverter 7.

The control device 13 includes a processor 13a and a memory 13b storing a control program. The control device 13 is configured to control the motor 2, the battery 6 and the inverter 7 by performing execution of the control program stored in the memory 13b based on the information received from the sensors by the processor 13a.

Next, a detailed structure of the motor 2 will be described with reference to FIG. 3.

The motor 2 includes the stator 17 having a substantially cylindrical shape and the rotor 19 having a substantially cylindrical shape that is provided in the stator 17 so as to be rotatable about an axis that is the same as a central axis of the stator 17.

The stator 17 includes a stator core 20 and a plurality of primary conductors 18 (primary coils).

The stator core 20 includes a plurality of electromagnetic steel sheets having a substantially annular shape stacked in an axial direction. The stator core 20 also includes a plurality of slots 20a that are recessed from an inner circumferential surface of the stator core 20 to a radial-direction outer side. The plurality of slots 20a are disposed side by side at predetermined intervals in a circumferential direction. The slots 20a house the plurality of primary conductors 18. The plurality of primary conductors 18 are U-phase coils, V-phase coils and W-phase coils, for example, and each coil is housed in a corresponding slot 20a.

Alternating currents shifted in phase by 120° are supplied to the U-phase coils, the V-phase coils and the W-phase coils from the inverter 7. When the alternating currents are supplied from the inverter 7 to the primary conductors 18, the primary conductors 18 produces a rotating magnetic field.

The rotor 19 is divided into an outer rotor part 21 and an inner rotor part 22 in a radial direction.

The outer rotor part 21 has a substantially annular shape when viewed in the axial direction. That is, the radial cross section is in a substantially annular shape. In the outer rotor part 21, a first through-hole 21a that penetrates in the axial direction is formed. The first through-hole 21a has the shape of an opening in a substantially octagonal shape when viewed in the axial direction.

The outer rotor part 21 further includes an outer rotor core 23 that has a plurality of blocks 21b. Each block 21b is made of a magnetic material, such as iron, and is formed to have a cross-sectional shape of an isosceles trapezoid with an arc-shaped bottom side when viewed in the axial direction. The outer rotor core 23 includes the plurality of blocks 21b that are disposed side by side at predetermined intervals in the circumferential direction.

The outer rotor core 23 includes a plurality of housing recesses 23a that are recessed from an outer circumferential surface of the outer rotor core 23 to a radial-direction inner side and a plurality of second through-holes 23b formed to penetrate the outer rotor core 23 from the inner circumferential surface to the outer circumferential surface in the radial direction. The plurality of housing recesses 23a and the plurality of second through-holes 23b are disposed side by side at predetermined intervals in the circumferential direction.

The inner rotor part 22 has a substantially octagonal shape when viewed in the axial direction, that is, the radial cross section is in a substantially octagonal shape. The inner rotor part 22 includes an inner rotor core 24 that includes a plurality of electromagnetic steel sheets having a substantially octagonal shape stacked in the axial direction.

In a central part of the inner rotor core 24, a third through-hole 24a that penetrates in the axial direction is formed. An output shaft 25 having a substantially cylindrical shape is inserted in the third through-hole 24a. A cooling passage 25a through which a cooling medium is supplied is formed in the output shaft 25.

The inner rotor core 24 (rotor 19) and the output shaft 25 are coupled to each other so as to integrally rotate. In this embodiment, a key 27 provided on an outer circumferential surface of the output shaft 25 is fitted in a key groove 26 provided in an inner circumferential surface of the inner rotor core 24, thereby coupling the inner rotor core 24 (rotor 19) and the output shaft 25 to each other in a relatively non-rotatable manner.

A housing space S having a substantially annular shape is provided between the outer rotor part 21 and the inner rotor part 22 in the radial direction. The housing space S is connected to radially-inner ends of the plurality of second through-holes 23b. The housing space S houses the permanent magnet unit 28.

The permanent magnet unit 28 includes a plurality of permanent magnets 29 extending in the axial direction arranged in the circumferential direction. The plurality of permanent magnets 29 are formed by ferrite magnets (for example, hard ferrite magnets such as barium ferrite magnets or strontium ferrite magnets). The ferrite magnet has properties of being hardly irreversibly demagnetized at high temperatures and being easily irreversibly demagnetized at low temperatures. That is, the ferrite magnet has opposite properties to rare-earth magnets (the neodymium magnet or the samarium-cobalt magnet, for example) having properties of being easily irreversibly demagnetized at high temperatures and being hardly irreversibly demagnetized at low temperatures.

The plurality of permanent magnets 29 have a plate-like shape and have a N-pole part 29a on one side in a thickness direction of the permanent magnet 29 and a S-pole part 29b on the other side in the thickness direction.

The plurality of permanent magnets 29 are disposed side by side at predetermined intervals in the circumferential direction in the housing space S. In this embodiment, each permanent magnet 29 is disposed at a circumferential position corresponding to one of the eight surfaces forming the outer circumferential surface of the inner rotor part 22. Furthermore, the plurality of permanent magnets 29 are orientated so that the respective thickness directions substantially agree with the radial direction.

The plurality of permanent magnets 29 are disposed in such a manner that the N-pole parts 29a and the S-pole parts 29b alternate. More specifically, a predetermined permanent magnet 29 is disposed with the N-pole part 29a on the outer side and the S-pole part 29b on the inner side. On the other hand, a permanent magnet 29 adjacent to the predetermined permanent magnet 29 in the circumferential direction is disposed with the S-pole part 29b on the outer side and the N-pole part 29a on the inner side. In this way, on the outer side of the plurality of permanent magnets 29, the N-pole part 29a and the S-pole part 29b are disposed alternately in the circumferential direction.

A surface of each permanent magnet 29 on one side in the thickness direction is in contact with the inner circumferential surface of the outer rotor part 21. A surface of each permanent magnet 29 on the other side in the thickness direction is in contact with the outer circumferential surface of the inner rotor part 22.

Radially-inner parts of the second through-holes 23b and the housing space S are filled with a resin material 30. That is, parts of the radially-inner parts of the second through-holes 23b and the housing space S that are not occupied by the permanent magnets 29 are filled with the resin material 30. The resin material 30 couples the outer rotor part 21, the inner rotor part 22 and the permanent magnets 29 to each other.

A cage unit 31 is provided on the outer side of the permanent magnet unit 28. In other words, the permanent magnet unit 28 is provided on the inner side of the cage unit 31.

The cage unit 31 includes a plurality of secondary conductors (secondary coils) 32 having a substantially plate-like shape and a pair of short-circuit rings (not shown) having a substantially annular shape. The plurality of secondary conductors 32 and the short-circuit rings are made of a non-magnetic conductor (aluminum or copper, for example). The axial ends of each of the plurality of secondary conductors 32 are coupled to different short-circuit rings.

The plurality of secondary conductors 32 includes a plurality of first secondary conductors 32a extending in the axial direction and the radial direction and a plurality of second secondary conductors 32b. The first secondary conductors 32a are disposed side by side at intervals of about 45° in the circumferential direction. A plurality of second secondary conductors 32b are disposed side by side between the first secondary conductors 32a in the circumferential direction.

The plurality of first secondary conductors 32a are housed in the plurality of second through-holes 23b and the housing space S. Furthermore, inner parts of the plurality of first secondary conductors 32a are interposed between permanent magnets 29 that are adjacent in the circumferential direction. That is, each permanent magnet 29 is interposed between inner parts of the plurality of first secondary conductors 32a on the opposite sides in the circumferential direction. In this way, the plurality of first secondary conductors 32a serve as walls that separate the permanent magnets 29 that are adjacent in the circumferential direction. Therefore, the plurality of first secondary conductors 32a block a magnetic flux from a permanent magnet 29 to the radial-direction outer side from leaking (leakage) to other permanent magnets 29 adjacent in the circumferential direction. The blocked magnetic flux is guided to the stator 17 by the plurality of first secondary conductors 32a and contributes to the generation of the motor torque.

Outer ends of the plurality of first secondary conductors 32a form an outer circumferential end part of the rotor 19. That is, the outer ends of the plurality of first secondary conductors 32a are located near the outer circumferential surface of the outer rotor core 23 (outer rotor part 21). Inner ends of the plurality of first secondary conductors 32a are located on the inner side than inner ends of the plurality of permanent magnets 29. Thus, the plurality of first secondary conductors 32a extends in the radial direction from positions on the inner side of the permanent magnets 29 to the outer circumferential end part of the rotor 19. Therefore, leaking (leakage) of the magnetic flux between permanent magnets 29 that are adjacent in the circumferential direction can be prevented with higher reliability.

The plurality of second secondary conductors 32b are housed in the plurality of housing recesses 23a disposed side by side in the circumferential direction. The plurality of housing recesses 23a are provided at circumferential positions corresponding to the permanent magnets 29 on the outer side of the permanent magnets 29. Therefore, the plurality of second secondary conductors 32b are disposed side by side in the circumferential direction at circumferential positions corresponding to the permanent magnets 29 on the outer side of the permanent magnets 29.

Outer ends of the plurality of second secondary conductors 32b form the outer circumferential end part of the rotor 19. That is, the outer ends of the plurality of first secondary conductors 32a are located near the outer circumferential end of the outer rotor core 23 (outer rotor part 21), and are located at radial positions that are substantially agree with the radial positions of the outer ends of the plurality of first secondary conductors 32a.

Inner ends of the plurality of second secondary conductors 32b are located on the outer side than inner ends of the plurality of permanent magnets 29. That is, the inner ends of the plurality of second secondary conductors 32b are located on the outer side than the inner ends of the plurality of first secondary conductors 32a. In this way, a space in which the plurality of permanent magnets 29 are disposed is provided in a region on the inner side of the plurality of second secondary conductors 32b.

The housing space S is filled with a resin material 30. That is, a part of the housing space S that is not occupied by the plurality of permanent magnets 29 and the plurality of first secondary conductors 32a is filled with the resin material 30. The resin material 30 couples the outer rotor part 21 including the plurality of first secondary conductors 32a, the inner rotor part 22 and the permanent magnets 29 to each other.

A cover 33 having a cylindrical shape for preventing flying out of the rotor (which is made of carbon fiber-reinforced plastics, for example) is wound around the outer periphery of the outer rotor core 23. In this way, the outer rotor part 21, the inner rotor part 22 and the permanent magnet unit 28 are firmly coupled to each other.

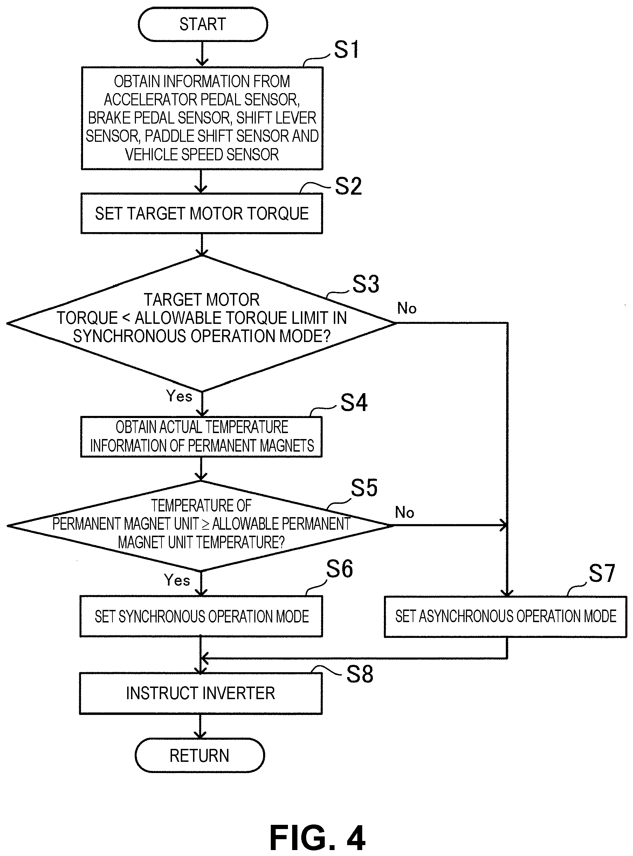

Next, with reference to FIG. 4, an example of a process of a control program executed by the processor 13a of the control device 13 will be described.

In Step S1, information transmitted from the accelerator pedal sensor 8, the brake pedal sensor 9, the shift lever sensor 10, the paddle shift sensor 11 and the vehicle speed sensor 12 is obtained.

In Step S2, a target motor torque is set based on the information obtained in Step S1. The target motor torque is a motor torque required by the driver of the vehicle 1.

When information indicating that the accelerator pedal is depressed by the driver is obtained from the accelerator pedal sensor 8, a target motor torque on a driving side (positive side) for driving the vehicle 1 is set. On the other hand, when information indicating that the brake pedal is depressed by the driver is obtained from the brake pedal sensor 9, a target motor torque on a regeneration side (negative side) for decelerating the vehicle 1 is set. Furthermore, the greater the depression amount of the accelerator pedal obtained from the accelerator pedal sensor 8 or the greater the depression amount of the brake pedal obtained from the brake pedal sensor 9, the greater the target motor torque set is**.**

When the shift position information obtained from the shift lever sensor 10 indicates parking or neutral, the target motor torque is set at 0. On the other hand, when the shift position information indicates reverse, drive or manual, the target torque is set at a value greater than 0. When the shift position information indicates manual and the shift lever is operated from the reference position, the target motor torque is decreased if the shift position information is information (plus operation information) indicating that the shift lever is operated from the reference position to the vehicle front side, and increased if the shift position information is information (minus operation information) indicating that the shift lever is operated from the reference position to the vehicle rear side.

When the operation information of the paddle shift switches obtained from the paddle shift sensor 11 indicates that a paddle shift switch is operated, the target motor torque is decreased if the operation information is plus operation information, and is increased if the operation information is minus operation information.

Furthermore, when the vehicle speed of the vehicle 1 obtained from the vehicle speed sensor 12 is high, the target motor torque is decreased compared with the other cases.

In Step S3, it is determined whether or not the target motor torque of the motor 2 set in Step S2 is smaller than an allowable torque limit in a predetermined synchronous operation mode. The allowable torque limit is set in advance from the magnetic force of the permanent magnet unit 28 mounted on the motor 2, for example.

When the determination result in Step S3 is Yes, the process proceeds to Step S4. On the other hand, when the determination result in Step S3 is No, the process proceeds to Step S7.

In Step S4, the actual temperature information of the permanent magnet unit 28 of the motor 2 is obtained from the temperature sensor 15, and then, the process proceeds to Step S5.

In Step S5, it is determined whether or not the actual temperature of the permanent magnet unit 28 is equal to or higher than an allowable permanent magnet unit temperature. The allowable permanent magnet unit temperature (a predetermined temperature) is set at 0 degrees Celsius or below (e.g., -40 degrees Celsius) so that when the temperature of the permanent magnet unit 28 is lower than the allowable permanent magnet unit temperature, the permanent magnet unit 28 (permanent magnets 29) can be irreversibly demagnetized.

When the determination result in Step S5 is Yes, the process proceeds to Step S6. In Step S6, the operation mode of the motor 2 is set at the synchronous operation mode, and then, the process proceeds to Step S8.

On the other hand, when the determination result in Step S5 is No, the process proceeds to Step S7.

In Step S7 (when the determination result in Step S3 is No or when the determination result in Step S5 is No), the operation mode of the motor 2 is set at an asynchronous operation mode, and then, the process proceeds to Step S8.

In Step S8, the inverter 7 is instructed so that the operation mode set in Step S6 or S7 occurs and the target motor torque set in Step S2 is generated, and then, the process returns. After that, the process is started again from Step S1 in FIG. 4, and the process in FIG. 4 is repeated. Note that such a configuration is adopted that in Step S8, in order to make the motor 2 generate the target motor torque, the inverter 7 is instructed so that the positions of the magnetic poles of the magnets of the rotor 19 are estimated from the rotational angle information of the rotor 19 obtained from the rotational angle sensor 16, and an alternating current having a predetermined phase, advanced position and magnitude with respect to the estimated positions of the magnetic poles of the magnets is passed through the primary conductors 18.

In this embodiment, when the synchronous operation mode is set in Step S6 while the motor 2 is operating in the asynchronous operation mode, the inverter 7 is instructed in Step S8 to switch from the asynchronous operation mode to the synchronous operation mode. When the asynchronous operation mode is set in Step S7 while the motor 2 is operating in the synchronous operation mode, the inverter 7 is instructed in Step S8 to switch from the synchronous operation mode to the asynchronous operation mode.

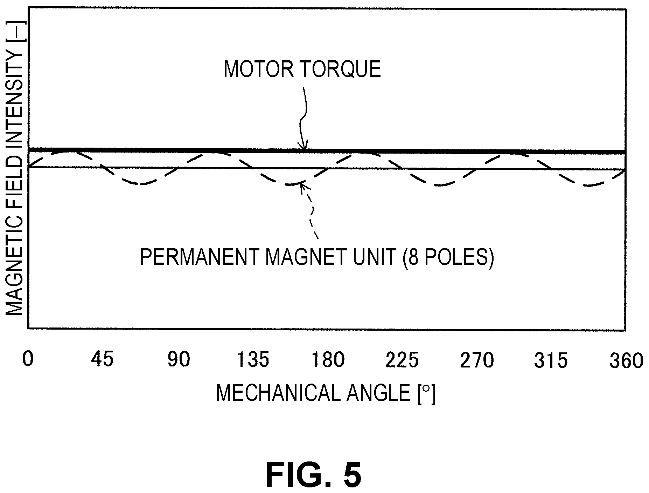

Next, with reference to FIG. 5, the synchronous operation mode in which the rotor 19 is rotated using the magnetic force of the permanent magnet unit 28 will be described. The synchronous operation mode is an operation mode in which the rotor 19 is rotated at a rotational speed (synchronous speed) of the rotating magnetic field. That is, in the synchronous operation mode, the rotational speed of the rotor 19 agrees with the rotational speed (synchronous speed) of the rotating magnetic field.

In FIG. 5, the vertical axis indicates the magnetic field intensity (the spatial magnetic flux density [-] corresponding to the magnetic field intensity), and the horizontal axis indicates the mechanical angle [°]. In FIG. 5, the dashed line indicates characteristics of the magnetic field intensity of the permanent magnet unit 28 with respect to the mechanical angle, and the thick solid line indicates the motor torque with respect to the mechanical angle. Note that in this embodiment, since the permanent magnet unit 28 includes eight permanent magnets 29, the number of poles (the numbers of the N poles and the S poles) of the permanent magnet unit 28 is eight.

When the motor 2 operates in the synchronous operation mode, an alternating current is supplied from the inverter 7 to the primary conductors 18 of the stator 17. When the alternating current is supplied, the primary conductors 18 produce a rotating magnetic field. In the synchronous operation mode, the number of the magnetic poles of the rotating magnetic field is eight (8 poles).

In the synchronous operation mode, since the rotor 19 rotates at the synchronous speed, the rotating magnetic field does not intersect with the secondary conductors 32 of the cage unit 31. That is, no speed difference (slip) occurs between the rotating magnetic field and the secondary conductors 32. Therefore, no secondary current (induced current) flows in the secondary conductors 32, so that the cage unit 31 does not contribute to the generation of the motor torque. Therefore, in the synchronous operation mode, the force that makes the output shaft 25 of the motor 2 rotate, that is, the motor torque, is generated by the rotating magnetic field and the magnetic field of the permanent magnet unit 28. Note that in the synchronous operation mode, as shown by the thick solid line in FIG. 5, the motor torque is generated by the rotating magnetic field and the magnetic field of the permanent magnet unit 28, and there is no pulsating component, so that no pulsation of the motor torque occurs.

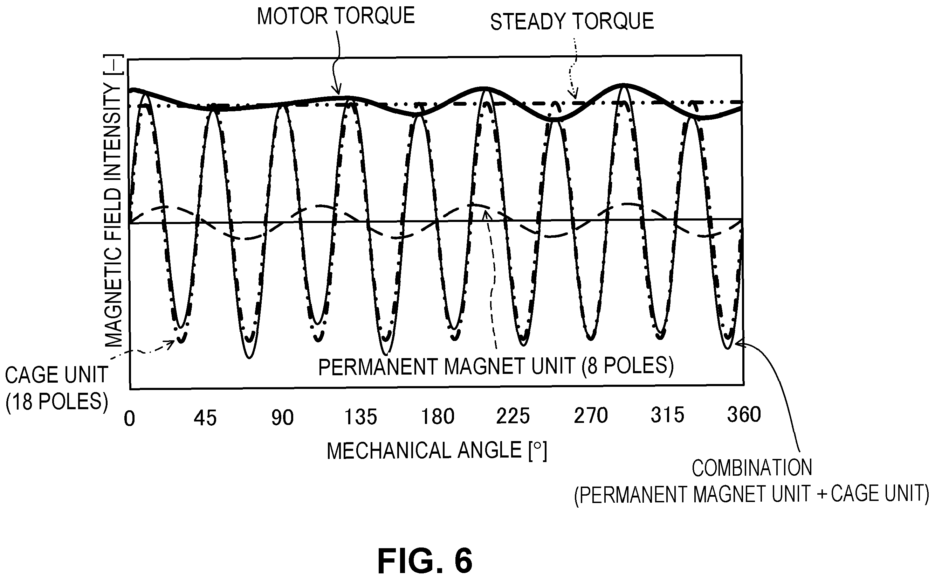

Next, with reference to FIG. 6, the asynchronous operation mode in which the rotor 19 is rotated using the secondary current (induced current) in the secondary conductors 32 of the cage unit 31 will be described. The asynchronous operation mode is an operation mode in which the rotor 19 is rotated at a rotational speed that is different from the rotational speed (synchronous speed) of the rotating magnetic field. That is, in the asynchronous operation mode, the rotational speed of the rotor 19 does not agree with the rotational speed (synchronous speed) of the rotating magnetic field.

In FIG. 6, as in FIG. 5, the vertical axis indicates the magnetic field intensity (the spatial magnetic flux density [-] corresponding to the magnetic field intensity), and the horizontal axis indicates the mechanical angle [°].

In FIG. 6, the dashed line indicates characteristics of the magnetic field intensity of the permanent magnet unit 28 with respect to the mechanical angle, the alternate long and short dash line indicates characteristics of the magnetic field intensity of the cage unit 31 with respect to the mechanical angle, the solid line indicates characteristics of the magnetic field intensity of a combination (the permanent magnet unit 28 and the cage unit 31) with respect to the mechanical angle, the thick solid line indicates the motor torque with respect to the mechanical angle, and the alternate long and two short dash line indicates a steady torque (the motor torque generated by only the magnetic field of the cage unit 31) with respect to the mechanical angle.

When the motor 2 operates in the asynchronous operation mode, as in the synchronous operation mode, an alternating current is supplied from the inverter 7 to the primary conductors 18 of the stator 17. When the alternating current is supplied, the primary conductors 18 produce a rotating magnetic field. In the asynchronous operation mode, the rotating magnetic field has eighteen magnetic poles (18 poles). Note that in this embodiment, the inverter 7 is configured to be able to arbitrarily change the number of magnetic poles (number of poles) of the rotating magnetic field of the stator 17 by changing the direction of the current flowing in each of the plurality of primary conductors 18 to increase or decrease the number of the primary conductors 18 in which the current flows in the same direction consecutively arranged in the circumferential direction.

In the asynchronous operation mode, since the rotor 19 rotates at a speed (asynchronous speed) that is different from the synchronous speed, the rotating magnetic field intersects with the secondary conductors 32 of the cage unit 31. That is, a speed difference (slip) occurs between the rotating magnetic field and the secondary conductors 32. Therefore, a secondary current (induced current) flows in the secondary conductors 32, so that eighteen magnetic poles (18 poles) are formed in the cage unit 31 (rotor 19), as with the rotating magnetic field of the stator 17 (see FIG. 6).

In the asynchronous operation mode, the magnetic field of the permanent magnet unit 28 is acting in the motor 2, as in the synchronous operation mode. The magnetic field of the permanent magnet unit 28 has eight magnetic poles (8 poles) as shown in FIG. 6. Therefore, in the asynchronous operation mode, the magnetic field of the permanent magnet unit 28 and the magnetic field of the cage unit 31 are combined (see the solid line in FIG. 6).

In this embodiment, since the number of poles of the permanent magnet unit 28 (8 poles) and the number of poles of the magnetic field of the cage unit 31 (18 poles) do not agree with each other, the cycle of the magnetic field intensity of the permanent magnet unit 28 with respect to the mechanical angle and the cycle of the magnetic field intensity of the cage unit 31 with respect to the mechanical angle are different. In other words, a phase difference occurs between the magnetic field of the permanent magnet unit 28 and the magnetic field of the cage unit 31. Therefore, the intensity of the combined magnetic field of the permanent magnet unit 28 and the cage unit 31 pulsates. In this embodiment, the magnetic field intensity of the cage unit 31 is greater than the magnetic field intensity of the permanent magnet unit 28, and therefore, the magnetic field intensity of the permanent magnet unit 28 is a component that causes the combined magnetic field intensity to pulsate.

Since the combined magnetic field intensity pulsates, the motor torque generated by the combined magnetic field and the rotating magnetic field pulsates (see the thick solid line in FIG. 6). In other words, the motor torque does not agree with the steady torque generated by only the magnetic field of the cage unit 31 (see the alternate long and two short dash line in FIG. 6) but pulsates (varies) as shown by the thick solid line in FIG. 6. When the motor torque pulsates, the angular velocity of the output shaft 25 of the motor 2 varies as with the crank shaft during combustion of an engine. Therefore, an angular velocity variation similar to that of the engine can be produced in the motor 2 in a pseudo manner.

The angular velocity variation of the output shaft 25 of the motor 2, that is, the vibration of the motor 2, is transferred from the motor 2 to the vehicle 1. The driver of the vehicle 1 can grasp the operational state of the motor 2 from the vibration of the motor 2 transferred to a vehicle cabin described above. In this way, a driver who is used to drive a vehicle equipped with an engine (engine vehicle) can be prevented from feeling strange when the driver cannot grasp the operational state of the motor 2 from the vibration of the motor 2 transferred to the vehicle cabin when driving the vehicle 1 (electric automobile) equipped with the motor 2.

As described above, according to the embodiment, the magnetic flux from each permanent magnet 29 to the radial-direction outer side is guided to the outer side of the rotor 19 by the first secondary conductors 32a and is directed to the stator 17. In this way, the magnetic flux can be prevented from leaking to adjacent other permanent magnets 29. In addition, since the leakage is prevented by using the first secondary conductors 32a of the cage unit 31, no additional member for preventing the leakage of the magnetic flux is required. Therefore, the cost of the motor 2 can be reduced.

In addition, the plurality of first secondary conductors 32a extend from the vicinity of the plurality of permanent magnets 29 to the outer circumferential end part of the rotor 19 in the radial direction. Therefore, the magnetic flux can be guided to the stator 17 with higher reliability compared with a case where the outer end of each first secondary conductor 32a is located in a radially halfway portion of the rotor 19.

In addition, the plurality of first secondary conductors 32a extend to the inner side than the plurality of permanent magnets 29. Therefore, the permanent magnets 29 that are adjacent in the circumferential direction are separated by the first secondary conductors 32a, so that the leakage of the magnetic flux can be prevented with higher reliability.

In addition, since the inner ends of the plurality of second secondary conductors 32b are located on the outer side than the inner ends of the plurality of first secondary conductors 32a, a region in which the plurality of permanent magnets 29 are disposed can be provided on the inner side of the plurality of second secondary conductors 32b.

In addition, the outer rotor part 21, the inner rotor part 22 and the plurality of permanent magnets 29 are coupled to each other by the resin material 30. Therefore, the outer rotor part 21, the inner rotor part 22 and the plurality of permanent magnets 29 can be prevented from being displaced from their respective appropriate positions.

### <Variations>

Note that although the inner rotor part 22 has a substantially octagonal shape when viewed in the axial direction in the embodiment, the inner rotor part 22 may have other polygonal shapes than the substantially octagonal shape (a substantially hexagonal shape, a substantially heptagonal shape, a substantially nonagonal shape, a substantially decagonal shape or a substantially dodecagonal shape, for example).

Although the permanent magnet 29 is formed by a ferrite magnet in this embodiment, the permanent magnet 29 may be formed by a rare-earth magnet.

Although the permanent magnet 29 has a plate-like shape in the embodiment, the permanent magnet 29 may have other shapes than the plate-like shape (an arc shape, for example).

Although the embodiment has been described with reference to an example in which the number of poles of the permanent magnet unit 28 is eight, the number of poles may be other than eight (four poles, six poles, ten poles or twelve poles, for example).

Although the embodiment has been described with reference to an example in which the plurality of second secondary conductors 32b of the cage unit 31 have a plate-like shape, the second secondary conductors 32b may have other shapes than the plate-like shape (a bar-like shape, for example).

Although the actual temperature of the permanent magnet unit 28 of the motor 2 is detected by the temperature sensor 15 in the embodiment, the temperature of the permanent magnet unit 28 may be estimated based on a travel history of the vehicle 1, a history of the alternating current supplied from the inverter 7 to the primary conductors 18 or the like.

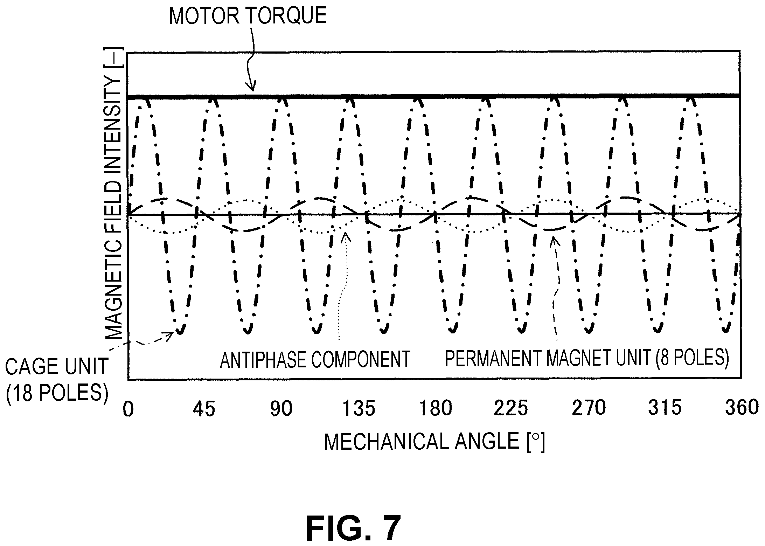

Although the motor torque pulsates in the asynchronous operation mode in this embodiment, the motor torque may be prevented from pulsating by producing a magnetic field that is antiphase with respect to the magnetic field of the permanent magnet unit 28 (see the dotted line in FIG. 7) to cancel the magnetic field of the permanent magnet unit 28. Note that the antiphase magnetic field is a magnetic field produced by the primary conductors 18 of the stator 17 and is produced by supplying, to the primary conductors 18, the current for driving the motor 2 that is superposed with a current that causes generation of a torque that is antiphase with respect to the pulsating component produced by the magnetic field of the permanent magnet unit 28. Alternatively, the pulsation of the motor torque may be reduced by producing an antiphase magnetic field in such a manner that the magnetic field of the permanent magnet unit 28 partially remains rather than being completely cancelled with the antiphase magnetic field. In this way, the pulsation of the motor torque can be eliminated (see the thick solid line in FIG. 7) or reduced in a situation where the driver or an occupant of the vehicle 1 does not want the pulsation of the motor torque (a case where the driver or an occupant is not used to a vehicle equipped with an engine, for example).

Although the inverter 7 makes the primary conductors 18 of the stator 17 produce a rotating magnetic field having eighteen poles in the asynchronous operation mode in this embodiment, a rotating magnetic field having other numbers of poles than eighteen (six poles, eight poles, twelve poles, fourteen poles or sixteen poles, for example) may be produced. When the motor torque is pulsated using the pulsating component produced by the magnetic field of the permanent magnet unit 28, the number of poles of the permanent magnet unit 28 is preferably different from the number of poles of the rotating magnetic field of the stator 17, that is, the number of poles of the cage unit 31.

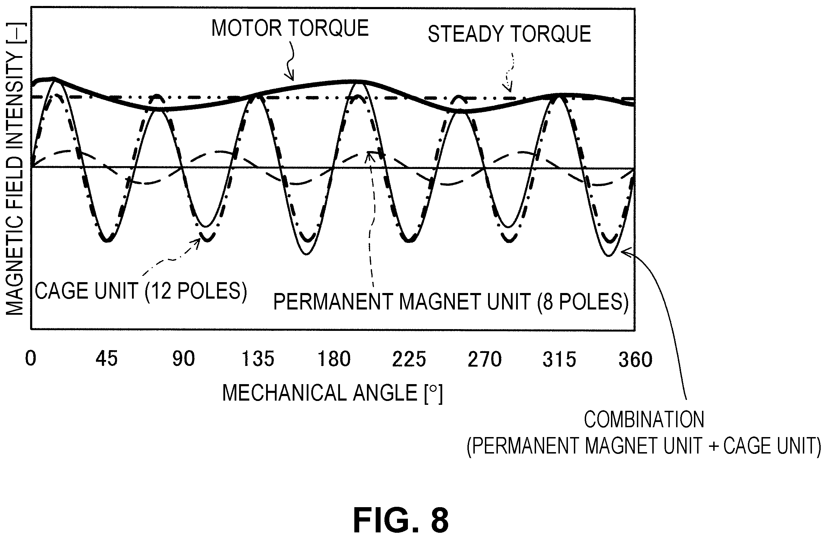

FIG. 8 shows an example of an asynchronous operation mode in which the number of poles of the rotating magnetic field is twelve. As shown in FIG. 8, twelve magnetic poles are formed in the cage unit 31, as with the rotating magnetic field. Since the number of poles (eight poles) of the magnetic field of the permanent magnet unit 28 does not agree with the number of poles (twelve poles) of the magnetic field of the cage unit 31, the cycle of the magnetic field intensity of the permanent magnet unit 28 with respect to the mechanical angle is different from the cycle of the magnetic field intensity of the cage unit 31. Therefore, a combined magnetic field of these magnetic fields shown by the solid line in FIG. 8 pulsates. Therefore, the motor torque generated by the combined magnetic field of the permanent magnet unit 28 and the cage unit 31 and the rotating magnetic field pulsates (see the thick solid line in FIG. 8). In the variation shown in FIG. 8, the cycle of the motor torque, that is, the frequency of the pulsation of the motor torque is less than in the embodiment shown in FIG. 6. Therefore, the frequency of the pulsation of the motor torque can be changed by changing the number of poles of the magnetic field of the cage unit 31(the number of poles of the rotating magnetic field). Note that the magnitude of the pulsation of the motor torque or the magnitude and frequency of the pulsation of the motor torque can be changed by appropriately changing the number of poles of the cage unit 31 or, in other words, by appropriately changing the difference between the number of poles of the permanent magnet unit 28 and the number of poles of the cage unit 31.

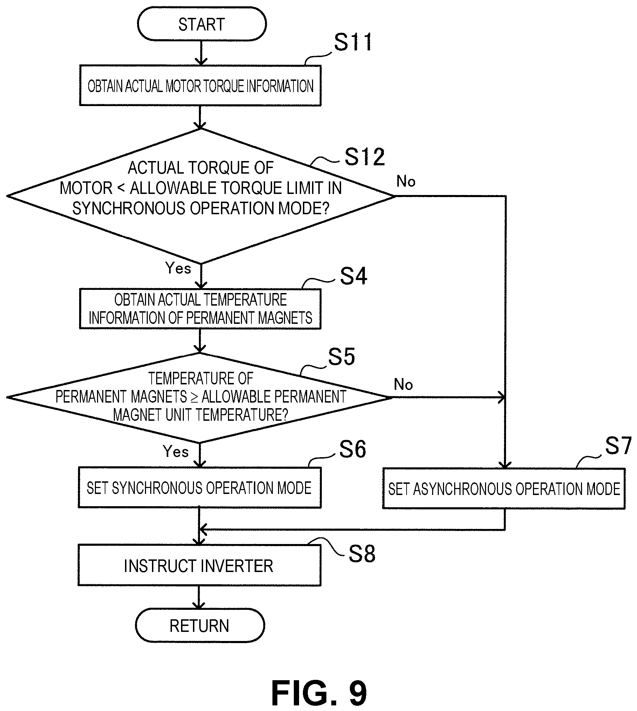

Although the operation mode of the motor 2 is set based on the target motor torque in this embodiment, the operation mode of the motor 2 may be controlled based on the actual motor torque as shown in a variation in FIG. 9. Note that in the variation shown in FIG. 9, Steps S1 to S3 in FIG. 4 are replaced with Steps S11 to S12.

In Step S11 in FIG. 9, the actual motor torque information of the motor 2 is obtained from the torque sensor 14. In Step S12, it is determined whether the actual motor torque information obtained in Step S11 is lower than the predetermined allowable torque limit in the synchronous operation mode. When the determination result in Step S12 is Yes, the process proceeds to Step S4, whereas when the determination result in Step S12 is No, the process proceeds to Step S7. Note that the processing in Steps S4 to S8 is the same as that in FIG. 4, descriptions thereof will be omitted.

Although the operation mode (synchronous operation mode or asynchronous operation mode) is set based on the target motor torque and the temperature of the permanent magnet unit 28 in this embodiment, the operation mode may be set based on any one of the target motor torque and the temperature of the permanent magnet unit 28. Furthermore, the operation mode of the motor 2 may be set based on the number of rotations of the motor 2 (which is obtained from the rotational angle sensor 16) instead of the target motor torque and the temperature of the permanent magnet unit 28 or in addition to the target motor torque and the temperature of the permanent magnet unit 28. For example, the asynchronous operation mode may be set when the number of rotations of the motor 2 is equal to or higher than a predetermined value, and the synchronous operation mode may be set when the number of rotations of the motor 2 is lower than the predetermined value. In this way, the asynchronous operation mode is implemented in a fast rotation range of the motor 2, so that the motor torque can be prevented from decreasing under the influence of the counter electromotive force of the permanent magnet unit 28 that increases in the fast rotation range in the fast rotation range of the motor 2. Furthermore, vehicle speed information obtained from the vehicle speed sensor 12 may be used instead of the number of rotations of the motor 2. In that case, for example, the asynchronous operation mode may be set when the vehicle speed of the vehicle 1 is equal to or higher than a predetermined value, and the synchronous operation mode may be set when the vehicle speed of the vehicle 1 is lower than the predetermined value.

Although the embodiment has been described with reference to an example in which the motor 2 drives only the front wheels FW, the front wheels FW and the rear wheels RW may be driven, only the rear wheels RW may be driven, or a plurality of motors 2 may be provided so that each front wheel FW and each rear wheel RW are separately driven.

Although an electric automobile has been described as an example of the vehicle 1 in the embodiment, the vehicle 1 can be any electric vehicle, such as a hybrid automobile equipped with the motor 2 and an engine (not shown).

Although a four-wheeled vehicle has been described as an example of the vehicle 1 in the embodiment, the vehicle 1 may be a three-wheeled vehicle or two-wheeled vehicle, or may be an agricultural vehicle (such as an agricultural tractor) as long as it can travel on land.

### [Industrial Applicability]

The present invention is suitable for a motor.

### [Reference Signs List]

- 1: vehicle
- 2: motor
- 17: stator
- 19: rotor
- 21: outer rotor part
- 22: inner rotor part
- 28: permanent magnet unit
- 29: permanent magnet
- 30: resin material
- 31: cage unit
- 32a: first secondary conductor (secondary conductor)
- 32b: second secondary conductor (other secondary conductor)
- S: housing space (housing part)
- FW: front wheel (driving wheel)

## Claims

1. A motor (2) comprising a stator (17) having a cylindrical shape and a rotor (19) having a cylindrical shape provided in the stator (17) so as to be rotatable about an axis that is the same as a central axis of the stator (17), a driving wheel (FW) of a vehicle (1) being driven by rotation of the rotor (19), wherein
the rotor (19) has a cage unit (31) and a permanent magnet unit (28) provided on an inner side of the cage unit (31),
the permanent magnet unit (28) has a plurality of permanent magnets (29) disposed side by side in a circumferential direction,
the cage unit (31) includes a plurality of secondary conductors (32a) that have a plate-like shape and extend in an axial and radial direction of the motor (2), and
the plurality of secondary conductors (32a) are configured such that the permanent magnet (29) is interposed between inner parts of secondary conductors (32a) on opposite sides in the circumferential direction,
wherein
the rotor (19) is divided into an outer rotor part (21) and an inner rotor part (22),
the plurality of permanent magnets (29) are housed in a housing part (S) provided between the outer rotor part (21) and the inner rotor part (22) in the radial direction, the plurality of secondary conductors (32a) are
housed in second through-holes (23b) and the housing space (S), and
the part of the housing space (S) that is not occupied by the plurality of the permanent magnets and the plurality of secondary conductors (32) is filled with a resin material (30) for coupling the outer rotor part (21), the inner rotor part (22) and the plurality of permanent magnets (29) to each other.

2. The motor (2) according to Claim 1, **characterized in that** outer ends of the plurality of secondary conductors (32a) form an outer circumferential end part of the rotor (19).

3. The motor (2) according to Claim 1 or 2, **characterized in that** inner ends of the plurality of secondary conductors (32a) are located on an inner side than inner ends of the plurality of permanent magnets (29).

4. The motor (2) according to Claim 1 or 2, **characterized in that** the cage unit (31) further includes a plurality of other secondary conductors (32b),
the plurality of other secondary conductors (32b) are disposed side by side in the circumferential direction at circumferential positions corresponding to the plurality of permanent magnets (29) on an outer side, and
inner ends of the plurality of other secondary conductors (32b) are located on an outer side than inner ends of the plurality of secondary conductors (32a).

5. The motor (2) according to Claim 4,
**characterized in that** a plurality of second secondary conductors 32b is disposed side by side between two first secondary conductors 32a in the circumferential direction.

6. The motor according to any one of Claims 1 to 5, **characterized in that** the first secondary conductors 32a are disposed side by side at intervals of about 45° in the circumferential direction.

7. The motor (2) according to any of the preceding Claims, **characterized in that** the permanent magnets have a plate-like shape,
the plurality of permanent magnets (29) are disposed side by side in a circumferential direction between the outer rotor part (21) and the inner rotor part (22) in a radial direction,
a surface on a side in a thickness direction of each permanent magnet (29) is in contact with an inner circumferential surface of the outer rotor part (21), and
a surface on another side in the thickness direction of each permanent magnet (29) is in contact with an outer circumferential surface of the inner rotor part (22).

8. The motor (2) according to any one of the preceding claims, **characterized in that** the number of poles of the permanent magnet unit (28) is different from the number of poles of the rotating magnetic field of the stator (17) and/or the number of poles of the cage unit (31) when the motor (2) is operated in an asynchronous operation mode.

9. The motor (2) according to any one of Claims 1 to 8, **characterized in that** the outer rotor part (21) includes an outer rotor core (23) having a plurality of housing recesses (23a) that are recessed from an outer circumferential surface of the outer rotor core (23) to a radial-direction inner side, wherein the plurality of second secondary conductors (32b) are housed in the plurality of housing recesses (23a).

10. The motor (2) according to Claim 9,
**characterized in that** a cover (33) having a cylindrical shape, in particularly made of carbon fiber-reinforced plastics, is wound around the outer periphery of the outer rotor core (23).

11. The motor (2) according to any one of the preceding claims 1 to 10, **characterized in that** the inner rotor part (2) has a polygonal shape, in particular an octagonal shape.

12. A vehicle driving system (5) comprising the motor (2) according to any one of the preceding claims, **characterized in that** the vehicle driving system (2) further comprises:
a controller capable of switching between a synchronous operation mode in which the rotor (19) is rotated using a magnetic force of the permanent magnet unit (28) and an asynchronous operation mode in which the rotor (19) is rotated using an induced current produced in the cage unit (31).

13. A vehicle including at least one driving wheel (FW) being driven by rotation of the rotor (19) according to anyone of claims 1 to 11 or being driven by rotation of a rotor (19) according to a driving system (5) according to claim 12.

## Patentansprüche

1. Motor (2), umfassend einen Stator (17) mit einer zylindrischen Form und einen Rotor (19) mit einer zylindrischen Form, der in dem Stator (17) derart vorgesehen ist, dass er um eine Achse drehbar ist, die mit einer Mittelachse des Stators (17) identisch ist, wobei ein Antriebsrad (FW) eines Fahrzeugs (1) durch Drehung des Rotors (19) angetrieben wird, wobei
der Rotor (19) eine Käfigeinheit (31) und eine Permanentmagneteinheit (28) aufweist, die auf einer Innenseite der Käfigeinheit (31) vorgesehen ist,
die Permanentmagneteinheit (28) eine Mehrzahl von Permanentmagneten (29) aufweist, die in einer Umfangsrichtung nebeneinander angeordnet sind,
die Käfigeinheit (31) eine Mehrzahl von Sekundärleitern (32a) umfasst, die eine plattenartige Form aufweisen und sich in Axial- und Radialrichtung des Motors (2) erstrecken, und
die Mehrzahl von Sekundärleitern (32a) derart konfiguriert ist, dass der Permanentmagnet (29) zwischen inneren Teilen von Sekundärleitern (32a) auf in der Umfangsrichtung gegenüberliegenden Seiten angeordnet ist, wobei
der Rotor (19) in einen äußeren Rotorteil (21) und einen inneren Rotorteil (22) unterteilt ist,
die Mehrzahl von Permanentmagneten (29) in einem Aufnahmeteil (S) aufgenommen ist, das zwischen dem äußeren Rotorteil (21) und dem inneren Rotorteil (22) in Radialrichtung vorgesehen ist, die Mehrzahl von Sekundärleitern (32a) in zweiten Durchgangslöchern (23b) und dem Aufnahmeraum (S) aufgenommen ist, und
der Teil des Aufnahmeraums (S), der nicht von der Mehrzahl der Permanentmagnete und der Mehrzahl von Sekundärleitern (32) belegt ist, mit einem Harzmaterial (30) zum miteinander Koppeln des äußeren Rotorteils (21), des inneren Rotorteils (22) und der Mehrzahl von Permanentmagneten (29) gefüllt ist.

2. Motor (2) nach Anspruch 1, **dadurch gekennzeichnet, dass** die äußeren Enden der Mehrzahl von Sekundärleitern (32a) einen äußeren Umfangsendabschnitt des Rotors (19) bilden.

3. Motor (2) nach Anspruch 1 oder 2, **dadurch gekennzeichnet, dass** die inneren Enden der Mehrzahl von Sekundärleitern (32a) weiter innen angeordnet sind als die inneren Enden der Mehrzahl von Permanentmagneten (29).

4. Motor (2) nach Anspruch 1 oder 2, **dadurch gekennzeichnet, dass** die Käfigeinheit (31) ferner eine Mehrzahl weiterer Sekundärleiter (32b) umfasst,
die Mehrzahl weiterer Sekundärleiter (32b) in Umfangsrichtung an Umfangspositionen, die der Mehrzahl von Permanentmagneten (29) entsprechen, auf einer Außenseite nebeneinander angeordnet ist, und
die inneren Enden der Mehrzahl weiterer Sekundärleiter (32b) weiter außen angeordnet sind als die inneren Enden der Mehrzahl von Sekundärleitern (32a).

5. Motor (2) nach Anspruch 4, **dadurch gekennzeichnet, dass** eine Mehrzahl zweiter Sekundärleiter 32b zwischen zwei ersten Sekundärleitern 32a in Umfangsrichtung nebeneinander angeordnet ist.

6. Motor nach einem der Ansprüche 1 bis 5, **dadurch gekennzeichnet, dass** die ersten Sekundärleiter 32a in Umfangsrichtung in Abständen von etwa 45° nebeneinander angeordnet sind.

7. Motor (2) nach einem der vorhergehenden Ansprüche, **dadurch gekennzeichnet, dass** die Permanentmagnete eine plattenartige Form aufweisen,
die Mehrzahl von Permanentmagneten (29) in Umfangsrichtung zwischen dem äußeren Rotorteil (21) und dem inneren Rotorteil (22) in Radialrichtung nebeneinander angeordnet ist,
eine Fläche auf einer Seite in Dickenrichtung jedes Permanentmagneten (29) mit einer inneren Umfangsfläche des äußeren Rotorteils (21) in Kontakt steht, und
eine Fläche auf einer anderen Seite in Dickenrichtung jedes Permanentmagneten (29) mit einer äußeren Umfangsfläche des inneren Rotorteils (22) in Kontakt steht.

8. Motor (2) nach einem der vorhergehenden Ansprüche, **dadurch gekennzeichnet, dass** die Anzahl der Pole der Permanentmagneteinheit (28) von der Anzahl der Pole des rotierenden Magnetfelds des Stators (17) und/oder der Anzahl der Pole der Käfigeinheit (31) verschieden ist, wenn der Motor (2) in einem asynchronen Betriebsmodus betrieben wird.

9. Motor (2) nach einem der Ansprüche 1 bis 8, **dadurch gekennzeichnet, dass** der äußere Rotorteil (21) einen äußeren Rotorkern (23) umfasst, der eine Mehrzahl von Aufnahmevertiefungen (23a) aufweist, die von einer äußeren Umfangsfläche des äußeren Rotorkerns (23) zu einer in Radialrichtung inneren Seite hin vertieft sind, wobei die Mehrzahl zweiter Sekundärleiter (32b) in der Mehrzahl von Aufnahmevertiefungen (23a) aufgenommen ist.

10. Motor (2) nach Anspruch 9, **dadurch gekennzeichnet, dass** eine Abdeckung (33) mit einer zylindrischen Form, insbesondere aus kohlenstofffaserverstärkten Kunststoffen hergestellt, um den Außenumfang des äußeren Rotorkerns (23) gewickelt ist.

11. Motor (2) nach einem der vorhergehenden Ansprüche 1 bis 10, **dadurch gekennzeichnet, dass** der innere Rotorteil (2) eine polygonale Form, insbesondere eine oktogonale Form, aufweist.

12. Fahrzeugantriebssystem (5), umfassend den Motor (2) nach einem der vorhergehenden Ansprüche, **dadurch gekennzeichnet, dass** das Fahrzeugantriebssystem (2) ferner umfasst:
eine Steuereinrichtung, die zwischen einem synchronen Betriebsmodus, in dem der Rotor (19) unter Verwendung einer Magnetkraft der Permanentmagneteinheit (28) gedreht wird, und einem asynchronen Betriebsmodus, in dem der Rotor (19) unter Verwendung eines in der Käfigeinheit (31) erzeugten induzierten Stroms gedreht wird, umschalten kann.

13. Fahrzeug, umfassend mindestens ein Antriebsrad (FW), das durch Drehung des Rotors (19) nach einem der Ansprüche 1 bis 11 angetrieben wird oder durch Drehung eines Rotors (19) gemäß einem Antriebssystem (5) gemäß Anspruch 12 angetrieben wird.

## Revendications

1. Moteur (2) comprenant un stator (17) présentant une forme cylindrique et un rotor (19) présentant une forme cylindrique prévu dans le stator (17) de manière à pouvoir tourner autour d'un axe qui est identique à un axe central du stator (17), une roue motrice (FW) d'un véhicule (1) étant entraînée par la rotation du rotor (19), dans lequel
le rotor (19) comporte une unité de cage (31) et une unité d'aimants permanents (28) prévue sur un côté intérieur de l'unité de cage (31),
l'unité d'aimants permanents (28) comporte une pluralité d'aimants permanents (29) disposés côte à côte dans une direction circonférentielle,
l'unité de cage (31) comprend une pluralité de conducteurs secondaires (32a) qui présentent une forme de plaque et s'étendent dans une direction axiale et radiale du moteur (2), et
la pluralité de conducteurs secondaires (32a) est configurée de telle sorte que l'aimant permanent (29) est interposé entre des parties intérieures de conducteurs secondaires (32a) situées sur des côtés opposés dans la direction circonférentielle, dans lequel
le rotor (19) est divisé en une partie de rotor extérieure (21) et une partie de rotor intérieure (22),
la pluralité d'aimants permanents (29) est logée dans une partie de logement (S) prévue entre la partie de rotor extérieure (21) et la partie de rotor intérieure (22) dans la direction radiale, la pluralité de conducteurs secondaires (32a) est logée dans des seconds trous traversants (23b) et l'espace de logement (S), et
la partie de l'espace de logement (S) qui n'est pas occupée par la pluralité des aimants permanents et la pluralité de conducteurs secondaires (32) est remplie d'un matériau en résine (30) pour coupler entre eux la partie de rotor extérieure (21), la partie de rotor intérieure (22) et la pluralité d'aimants permanents (29).

2. Moteur (2) selon la revendication 1, **caractérisé en ce que** les extrémités extérieures de la pluralité de conducteurs secondaires (32a) forment une partie d'extrémité circonférentielle extérieure du rotor (19).

3. Moteur (2) selon la revendication 1 ou 2, **caractérisé en ce que** les extrémités intérieures de la pluralité de conducteurs secondaires (32a) sont situées plus à l'intérieur que les extrémités intérieures de la pluralité d'aimants permanents (29).

4. Moteur (2) selon la revendication 1 ou 2, **caractérisé en ce que** l'unité de cage (31) comprend en outre une pluralité d'autres conducteurs secondaires (32b),
la pluralité d'autres conducteurs secondaires (32b) est disposée côte à côte dans la direction circonférentielle, à des positions circonférentielles correspondant à la pluralité d'aimants permanents (29), sur un côté extérieur, et
les extrémités intérieures de la pluralité d'autres conducteurs secondaires (32b) sont situées plus à l'extérieur que les extrémités intérieures de la pluralité de conducteurs secondaires (32a).

5. Moteur (2) selon la revendication 4, **caractérisé en ce qu'**une pluralité de seconds conducteurs secondaires 32b est disposée côte à côte entre deux premiers conducteurs secondaires 32a dans la direction circonférentielle.

6. Moteur selon l'une quelconque des revendications 1 à 5, **caractérisé en ce que** les premiers conducteurs secondaires 32a sont disposés côte à côte à des intervalles d'environ 45° dans la direction circonférentielle.

7. Moteur (2) selon l'une quelconque des revendications précédentes, **caractérisé en ce que** les aimants permanents présentent une forme de plaque,
la pluralité d'aimants permanents (29) est disposée côte à côte dans une direction circonférentielle entre la partie de rotor extérieure (21) et la partie de rotor intérieure (22) dans une direction radiale,
une surface située sur un côté dans une direction d'épaisseur de chaque aimant permanent (29) est en contact avec une surface circonférentielle intérieure de la partie de rotor extérieure (21), et
une surface située sur un autre côté dans la direction d'épaisseur de chaque aimant permanent (29) est en contact avec une surface circonférentielle extérieure de la partie de rotor intérieure (22).

8. Moteur (2) selon l'une quelconque des revendications précédentes, **caractérisé en ce que** le nombre de pôles de l'unité d'aimants permanents (28) est différent du nombre de pôles du champ magnétique tournant du stator (17) et/ou du nombre de pôles de l'unité de cage (31) lorsque le moteur (2) fonctionne dans un mode de fonctionnement asynchrone.

9. Moteur (2) selon l'une quelconque des revendications 1 à 8, **caractérisé en ce que** la partie de rotor extérieure (21) comprend un noyau de rotor extérieur (23) présentant une pluralité d'évidements de logement (23a) qui sont en retrait depuis une surface circonférentielle extérieure du noyau de rotor extérieur (23) vers un côté intérieur dans la direction radiale, dans lequel la pluralité de seconds conducteurs secondaires (32b) est logée dans la pluralité d'évidements de logement (23a).

10. Moteur (2) selon la revendication 9, **caractérisé en ce qu'**un revêtement (33) présentant une forme cylindrique, notamment constitué de matières plastiques renforcées de fibres de carbone, est enroulé autour de la périphérie extérieure du noyau de rotor extérieur (23).

11. Moteur (2) selon l'une quelconque des revendications précédentes 1 à 10, **caractérisé en ce que** la partie de rotor intérieure (2) présente une forme polygonale, en particulier une forme octogonale.

12. Système d'entraînement de véhicule (5) comprenant le moteur (2) selon l'une quelconque des revendications précédentes, **caractérisé en ce que** le système d'entraînement de véhicule (2) comprend en outre :
un dispositif de commande apte à commuter entre un mode de fonctionnement synchrone dans lequel le rotor (19) est mis en rotation à l'aide d'une force magnétique de l'unité d'aimants permanents (28) et un mode de fonctionnement asynchrone dans lequel le rotor (19) est mis en rotation à l'aide d'un courant induit produit dans l'unité de cage (31).

13. Véhicule comprenant au moins une roue motrice (FW) entraînée par la rotation du rotor (19) selon l'une quelconque des revendications 1 à 11 ou entraînée par la rotation d'un rotor (19) selon un système d'entraînement (5) selon la revendication 12.
